# EUROPÄISCHE PATENTSCHRIFT

(11) **EP 0 524 471 B1**
(45) Veröffentlichungstag und Bekanntmachung des Hinweises auf die Patenterteilung: **17.09.1997**
(21) Anmeldenummer: 92111377.5
(22) Anmeldetag: 04.07.1992
(51) Int. Cl.: B65G 57/26, B65G 49/08

(54) **Vorrichtung zum Herstellen eines Steinformling-Stapels**
Device for stacking green bricks
Dispositif pour mettre en pile des briques crues

(30) Priorität: 20.07.1991 DE 4124161
(43) Veröffentlichungstag der Anmeldung: 27.01.1993
(73) Patentinhaber: LANGENSTEIN & SCHEMANN GMBH, D-96450 Coburg (DE)
(72) Erfinder: Rüger, Herbert, Dipl.-Ing., W-8621 Schneckenlohe/OT Beickheim (DE)
(74) Vertreter: Böhme, Volker, Dipl.-Ing.

(56) Entgegenhaltungen:
- DE-A- 2 101 509
- DE-A- 2 754 899
- DE-U- 1 779 748

## Beschreibung

Die Erfindung betrifft eine Vorrichtung zum Herstellen eines Steinformling-Stapels auf einer Stapelplattform, bei der ein Stapelgreiferkopf zwischen der Stapelplattform und einem Förderband mittels eines Schiebeantriebs seitlich hin- und herbewegbar ist und Einzelgreifer für je einen Steinformling aufweist, bei der die Einzelgreifer in Längsreihen angeordnet sind und jeweils zwei Klemmbacken aufweisen, die mittels einer Kloben-Zylinder-Einrichtung betätigbar sind, der ein Steuerventil zugeordnet ist, und bei der eine Steuereinrichtung vorgesehen ist, die verschiedene Steuerstellungen für die Einzelgreifer aufweist, gemäß dem Oberbegriff des Patentanspruchs 1.

Dieser Art von Vorrichtung entspricht in etwa eine bekannte (DE-A-21 01 509) Vorrichtung, bei der die in Längsreihen angeordneten Einzelgreifer in einer Steuerstellung nur für einen Teil der Stapel-Lage vorgesehen sind und mittels der Steuerstellung mit der einen stillgesetzten äußeren Längsreihe sowie der Steuerstellung mit der vermehrten Zahl von stillgesetzten äußeren Längsreihen dann bei weiteren Hin- und Herbewegungen des Stapelgreiferkopfs die Stapel-Lage vervollständigen. Es ist auch ein Stapel von Steinformlingen bekannt (DE-U-1 779 748), bei dem auf einer vollständigen Stapel-Lage eine erste, um die eine Längsreihe reduzierte Stapel-Lage, darauf eine zweite, um die vermehrte Zahl von Längsreihen reduzierte Stapel-Lage und darauf eine dritte, um die weiter vergrößerte Zahl von Längsreihen reduzierte Stapel-Lage vorgesehen ist.

Bei einer durch die Praxis bekannten Vorrichtung mit einem Stapelgreifenkopf sind nur zwei verschiedene Steuerstellungen vorgesehen und zwar eine Normalstellung, bei der sämtliche Einzelgreifer bestätigt werden, um einen Steinformling zu erfassen, und eine Sonderstellung, bei der die Einzelgreifer der beiden äußeren Reihen ausgesetzt sind und keinen Steinformling erfassen. Dies ist vorgesehen, um am Stapel auf einer oberen letzten vollen Lage noch eine reduzierte Lage von Steinformlingen vorzusehen, bei der die beiden jeweils äußeren Steinformling-Reihen weggelassen sind. Diese Verminderung des Stapelquerschnittes nach oben hin erfolgt, weil der Stapel auf der Stapelplattform in einen im Querschnitt runden Tunnel eines Härteofens gefahren wird und der Querschnitt des Tunnels nach oben hin besser genutzt wird; jedoch bleibt in dem Tunnel über der reduzierten Lage und in der reduzierten Lage noch ungenutzter Tunnelquerschnitt.

Eine Aufgabe der Erfindung ist es daher, eine Vorrichtung der eingangs genannten Art zu schaffen, welche im Stapel nach oben hin zunehmend reduzierte, d. h. in der waagerechten Abmessung mehr und mehr verminderte Lagen stapelt. Die erfindungsgemäße Vorrichtung weist, diese Aufgabe lösend, die kennzeichnenden Merkmale des Patentanspruchs 1 auf.

Es läßt sich nun ein Stapel herstellen, der eine erste reduzierte Lage aufweist, bei der an beiden Seiten je eine Reihe von Steinformlingen fehlt, der darauf eine zweite reduzierte Lage aufweist, bei der an beiden Seiten je zwei Reihen von Steinformlingen fehlen, der darauf eine dritte reduzierte Lage aufweist, bei der an beiden Seiten je drei Reihen von Steinformlingen fehlen, usw.. Durch die Einzelansteuerbarkeit der Einzelgreifer lassen sich am Stapel nach oben hin Lagen mit mehr und mehr verminderter waagerechter Abmessung herstellen. Die Erfindung wird primär in Verbindung mit der Kalksandsteinherstellung verwendet, bei der eine Mischung von Sand, Kalk und Wasser zum Steinformling gepreßt wird. Der sich nach oben in der Breitenabmessung über mehrere Lagen verjüngende Stapel nutzt den runden Querschnitt eines Härteofen-Tunnels besser aus. Die verschiedenen Steuerstellungen folgen einander bei den oberen Stapel-Lagen.

Bei kleineren Steinformlingen wird jeder Steinformling hinsichtlich der Anordnung der Einzelgreifer in Querreihen von nur einem Einzelgreifer ergriffen. Größere Steinformlinge werden von zwei oder drei in einer Querreihe befindlichen, nebeneinander angeordneten Einzelgreifern ergriffen. In diesem Fall werden zunächst zwei oder drei Längsreihen, dann vier oder sechs und danach sechs oder neun Längsreihen von Einzelgreifern stillgesetzt.

Es ist möglich, jeweils die Kolben-Zylinder-Einrichtung einer Längsreihe von Einzelgreifern über nur ein Steuerventil zu betätigen. Besonders zweckmäßig und vorteilhaft ist es jedoch, wenn in den Längsreihen jedem Einzelgreifer ein Steuerventil zugeordnet ist und das Steuerventil jedes Einzelgreifers über eine Steuerleitung gesondert betätigbar ist. Die Ansteuerung jedes einzelnen Einzelgreifers ist zuverlässiger und schneller.

Üblicherweise werden die feuchten, grünen Steinformlinge auf einem Zwischentransport-Förderband in Stapelgruppen herangebracht, in denen die Steinformlinge in Reihen angeordnet sind und die der Gruppierung der benutzten Einzelgreifer des Entladegreiferkopfes entsprechen. Der herzustellende Stapel besteht üblicherweise in waagerechter Richtung nicht aus nur einer abgelegten Lage, sondern aus zwei oder mehr nacheinander abgelegten Lagen, die seitlich gegeneinander versetzt sind. Der Stapel, dessen Breitenabmessung sich am oberen Ende nach oben hin verjüngen soll, besteht also aus zwei oder mehr nebeneinander aufgebauten Teilstapeln.

Besonders zweckmäßig und vorteilhaft ist es daher, wenn sich der Stapelgreiferkopf für eine erste Lage in einer ersten Schiebeposition über der Stapelplattform befindet und für eine zweite, daneben angeordnete Lage in einer zweiten seitlich versetzten Schiebeposition befindet und wenn die Steuerstellungen für die Steuerventile bei der ersten Schiebeposition verschieden sind von den Steuerstellungen für die Steuerventile bei der zweiten seitlich versetzten Schiebeposition. Auf diese Weise wird im Rahmen der Erfindung ein aus zwei oder mehr Teilstapeln bestehender Stapel hergestellt. Z. B. sind für eine Lage rechts außen befindliche Reihen von Einzelgreifern stillgesetzt und für eine zweite seitlich versetzt anzuordnende Lage links außen befindliche Reihen von Einzelgreifern stillgesetzt. "Stillgesetzt" bedeutet hier, daß diese Einzelgreifer zum Abnehmen von Steinformlingen vom Zwischentransport-Förderband nicht zugreifen.

Besonders vorteilhaft und zweckmäßig ist es im Rahmen der Erfindung auch, wenn für eine Lage eine Schiebeposition und eine nachfolgend höher angeordnete Lage eine Schiebeposition vorgesehen ist und wenn die zweite Schiebeposition um ein ganzzahliges Vielfaches einer Steinformling-Breite seitlich versetzt zur ersten Schiebeposition des Stapelgreiferkopfes ist. Die Variabilität in der Schiebeposition, in der der Stapelgreiferkopf zum Freigeben der Steinformlinge stillgesetzt wird, ermöglicht es, eine vollständige Lage von Steinformlingen so abzulegen, daß sie zwei nebeneinander befindliche, darunter angeordnete Lagen überlappt. Diese Möglichkeit erleichtert es, den oberen, sich verjüngenden Bereich des Stapels gefüllt mit Steinformlingen dem runden Tunnel verbessert angepaßt herzustellen.

In der Zeichnung ist eine bevorzugte Ausführungsform der Erfindung schematisch dargestellt und zeigt
- Fig. 1: eine Draufsicht auf ein Zwischentransport-Förderband und eine Stapelplattform einer Vorrichtung zum Herstellen eines Steinformling-Stapels.
- Fig. 2: in einem gegenüber Fig. 1 vergrößteren Maßstab eine Vorderansicht der Stapelplattform gemäß Fig. 1 mit einem fertig hergestellten Steinformling-Stapel und
- Fig. 3: einen Stapelgreiferkopf, einen Schiebeantrag und eine Steuereinrichtung der Vorrichtung gemäß Fig. 1 und 2.

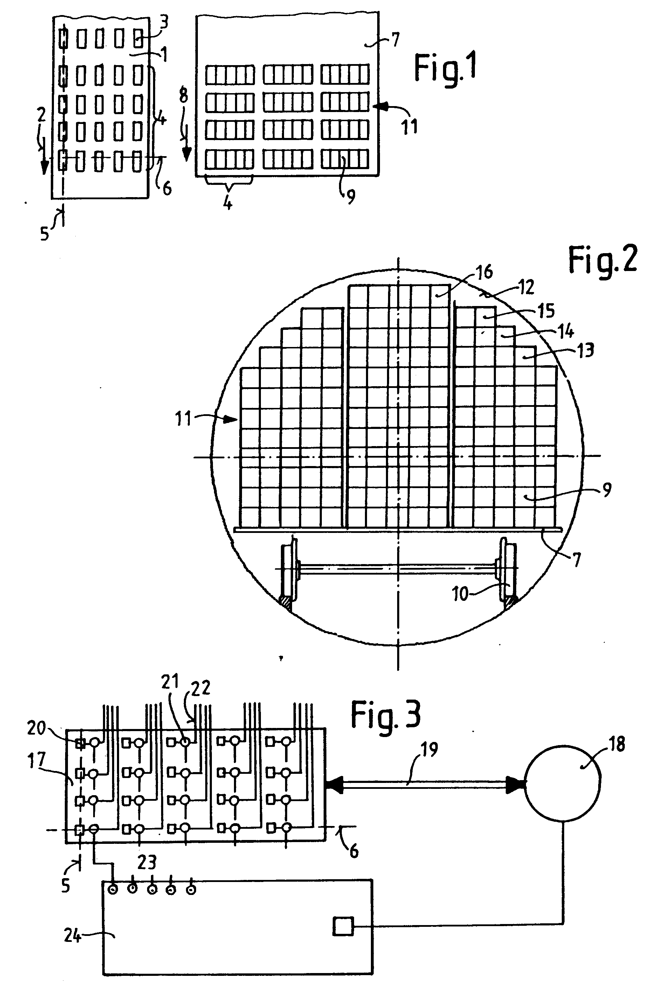

Die Vorrichtung gemäß Zeichnung umfaßt ein Zwischentransport-Förderband 1, das von einem nicht gezeigten Förderantrieb schrittweise in Richtung eines Pfeiles 2 bewegt wird. Auf dem Förderband 1 kommen Steinformlinge 3 an, die in Stapelgruppen 4 geordnet sind, die in Längsreihen 5 und Querreihen 6 gegliedert sind. Ein in Fig. 1 nicht gezeigter Stapelgreiferkopf nimmt die Steinformlinge 3 auf dem Förderband 1 auf, und bringt sie seitlich hinüber zu einer Stapelplattform 7, wobei die Steinformlinge einander in Richtung Querreihen 6 genähert werden. Die Vertikal- und Horizontalbewegungen des Stapelgreiferkopfes werden hier nicht näher erörtert. Die Stapelplattform 7 wird schrittweise in Richtung eines Pfeiles 8 weiterbewegt. Auf der Stapelplattform 7 werden in Richtung der Querreihen 6 jeweils drei Lagen 9 von Steinformlingen nebeneinander vorgesehen, die jeweils einer Stapelgruppe 4 zugeordnet sind, so daß ein Stapel aus drei Teilstapeln entsteht.

Gemäß Fig. 2 ist eine Stapelplattform 7 auf Rädern 10 vorgesehen und wird mit dem fertigen Stapel 11 in einen Tunnel 12 eines nicht näher gezeigten Härteofens gefahren. Der Stapel 11 weist eine erste reduzierte Lage 13, eine zweite reduzierte Lage 14 und eine dritte reduzierte Lage 15 auf und besitzt ganz oben nur im mittleren Teilstapel eine vollständige Lage 16. Es sind hier jeweils äußere Längsreihen 5 von Steinformlingen weggelassen, d. h. nicht vom Förderband abgenommen. Diese nicht abgenommenen Steinformlinge werden vom Förderband einer Wiederverwertung zugeführt. Die auf gleicher Höhe nebeneinander angeordneten reduzierten Lagen sind in Richtung der Querreihen durchgehend, d. h. die jeweils drei nebeneinander angeordneten Querreihen sind nur außen reduziert und im Inneren vollständig. Auf diese Weise ist die Anzahl der nicht vom Förderband abgenommenen und der Wiederverwertung zugeführten Steinformlinge beachtlich vermindert.

Gemäß Fig. 3 ist der Stapelgreiferkopf 17 mit Einzelgreifern 20 bestückt, die in Längsreihen 5 und Querreihen 6 angeordnet sind. Von einem Schiebeantrag 18 wird der Stapelgreiferkopf 17 über eine Einrichtung 19 seitlich hin- und herbewegt. Jeder Einzelgreifer 20 ist mit einer nicht gezeigten Kolben-Zylinder-Einrichtung versehen, der ein Steuerventil 21 zugeordnet ist, dem über eine eigene Fluidumleitung 22 Preßluft zuführbar ist. Jedes Steuerventil 21 wird über eine elektrische Steuerleitung 23 betätigt, die sämtliche zu einer Steuereinrichtung 24 geführt sind. Von dieser Steuereinrichtung 24 aus werden die Steuerventile 20 z. B. entsprechend einem Programm betätigt, das einem Rechner eingegeben ist. Von dieser Steuereinrichtung 24 aus wird auch der Schiebeantrieb 18 so betätigt, daß der Stapelgreiferkopf 17 in einer gewünschten horizontalen Schiebeposition stehen bleibt.

## Patentansprüche

1. Vorrichtung zum Herstellen eines aus mehreren Stapel-Lagen bestehenden Steinformling-Stapels auf einer Stapelplattform,
bei der ein Stapelgreiferkopf (17) zwischen der Stapelplattform (7) und einem Förderband (1) mittels eines Schiebeantriebs (18) seitlich hin- und herbewegbar ist und Einzelgreifer (20) für je einen Steinformling (3) aufweist,
bei der die Einzelgreifer in Längsreihen (5) angeordnet sind und jeweils zwei Klemmbacken aufweisen, die mittels einer Kolben-Zylinder-Einrichtung betätigbar sind, der ein Steuerventil (21) zugeordnet ist, wobei den Einzelgreifern (20) zumindest längsreihenweise (5) je ein Steuerventil (21) zugeordnet ist,
bei der eine Steuereinrichtung (24) vorgesehen ist, die verschiedene Steuerstellungen für die Einzelgreifer aufweist,
bei der die Steuerventile (21) der Längsreihen (5) von Einzelgreifern (20) von der Steuereinrichtung (24) her jeweils über eine Steuerleitung (23) gesondert betätigbar sind, und
bei der für eine Stapel-Lage eine Steuerstellung vorgesehen ist, bei der zumindest eine äußere Längsreihe (5) von Einzelgreifern (20) stillgesetzt ist, und für eine Stapel-Lage eine Steuerstellung vorgesehen ist, bei der eine vermehrte Zahl von nebeneinander befindlichen äußeren Längsreihen (5) von Einzelgreifern stillgesetzt ist,
dadurch gekennzeichnet,
daß die in Längsreihen (5) angeordneten Einzelgreifer (20) in einer Stellung für eine vollständige Stapel-Lage (9) vorgesehen sind, und bis zu einer bestimmten Stapelhöhe vollständige Stapel-Lagen übereinandergelegt werden,
und daß ab der bestimmten Stapelhöhe zunehmend reduzierte Stapel-Lagen übereinandergelegt werden, indem
die Steuerstellung mit der einen stillgesetzten äußeren Längsreihe (5) für eine erste reduzierte Stapel-Lage (13) vorgesehen ist,
die Steuerstellung mit der vermehrten Zahl von stillgesetzten äußeren Längsreihen für eine zweite reduzierte Stapel-Lage (14) vorgesehen ist, und
eine Steuerstellung vorgesehen ist, bei der eine weiter vergrößerte Zahl von nebeneinander befindlichen Längsreihen (5) von Einzelgreifern (20) stillgesetzt ist und zwar für eine dritte reduzierte Stapel-Lage (15).

2. Vorrichtung nach Anspruch 1, dadurch gekennzeichnet, daß in den Längsreihen (5) jedem Einzelgreifer (20) ein Steuerventil (21) zugeordnet ist und das Steuerventil (21) jedes Einzelgreifers (20) über eine Steuerleitung (23) gesondert betätigbar ist.

3. Vorrichtung nach Anspruch 1 oder 2, wobei sich der Stapelgreiferkopf für eine erste Stapel-Lage in einer ersten Schiebeposition über der Stapelplattform befindet und für eine zweite, daneben angeordnete Stapel-Lage in einer zweiten, seitlich versetzten Schiebeposition befindet, **dadurch gekennzeichnet**, daß die Steuerstellungen für die Steuerventile (21) bei der ersten Schiebeposition verschieden sind von den Steuerstellungen für die Steuerventile (21) bei der zweiten, seitlich versetzten Schiebeposition.

4. Vorrichtung nach einem der vorhergehenden Ansprüche, wobei für eine Stapel-Lage eine Schiebeposition und eine nachfolgend im Stapel höher angeordnete Stapel-Lage eine Schiebeposition vorgesehen ist, **dadurch gekennzeichnet**, daß die zweite Schiebeposition um ein ganzzahliges Vielfaches einer Steinformling-Breite seitlich versetzt zur ersten Schiebeposition des Stapelgreiferkopfes (17) ist.

## Claims

1. Apparatus for producing a green brick stack - consisting of a plurality of stack layers - on a stacking platform, in which a stack gripper bead (17) is moveable laterally to-and-fro between the stacking platform (7) and a conveying belt (1) by means of a sliding drive (18) and has an individual gripper (20) for each green brick (3); in which the individual grippers are arranged in longitudinal rows (5) and each have two clamping jaws actuatable by means of a piston-cylinder device with which a control valve (21) is associated, a respective control valve (21) being associated with each individual gripper (20) - in the longitudinal rows (5) at least; in which a control device (24) is provided which has various control positions for the individual grippers; in which the control valves (21) of the longitudinal rows (5) of individual grippers (20) are each separately actuatable by the control device (24) via a control line (23); and in which for one stack layer, a control position is provided in which at least one outer longitudinal row (5) of individual grippers (20) is brought to rest, and for one stack layer, a control position is provided in which a larger number of side by side located outer longitudinal rows (5) of individual grippers is brought to rest, characterised in that the individual grippers (20) arranged in longitudinal rows (5) are provided in a position for a complete stack layer (9), and complete stack layers are placed on top of one another up to a certain stacking height, and in that from the certain stacking height upwards, increasingly reduced stack layers are placed on top of one another by the control position with the one at rest outer longitudinal row (5) being provided for a first reduced stack layer (13), the control position with the larger number of at rest outer longitudinal rows being provided for a second reduced stack layer (14), and a control position being provided in which a further increased number of side by side located longitudinal rows (5) of individual grippers (20) is brought to rest, namely for a third reduced stack layer (15).

2. Apparatus in accordance with Claim 1, characterised in that a control valve (21) is - in the longitudinal rows (5) - associated with each individual gripper (20), and the control valve (21) of each individual gripper (20) is separately actuatable via a control line (23).

3. Apparatus in accordance with Claim 1 or 2, the stack gripper head being located in a first sliding position above the stacking platform for a first stack layer and being located in a second, laterally displaced sliding position for a second stack layer located alongside the first, characterised in that the control positions for the control valves (21) differ in the first sliding position from the control positions for the control valves (21) in the second, laterally displaced sliding position.

4. Apparatus in accordance with any one of the preceding Claims, one sliding position being provided for one stack layer and one sliding position being provided for subsequent stack layer arranged higher in the stack, characterised in that the second sliding position is laterally displaced with regard to the first sliding position of the stack gripper head (17) by an integral multiple of the width of a green brick.

## Revendications

1. Dispositif pour la formation d'une pile de briques crues, composé de plusieurs assises de piles, sur une plate-forme d'empilement,
dans lequel une tête preneuse d'empilement (17) peut être déplacée latéralement en va-et-vient entre la plate-forme d'empilement (7) et une bande transporteuse (1) sous l'action d'un entraînement de translation (18) et présente des pinces individuelles (20) en raison d'une pour chaque brique crue (3),
dans lequel les pinces individuelles sont agencées en rangées longitudinales (5) et présentent chacune deux mâchoires de serrage qui peuvent être actionnées au moyen d'un dispositif à piston et cylindre auquel est associé un distributeur (21), un distributeur (21) étant associé aux pinces individuelles (20), au moins un distributeur pour chaque rangée longitudinale (5),
dans lequel il est prévu un dispositif de commande (24) qui peut prendre plusieurs positions de commande pour les pinces individuelles,
dans lequel les distributeurs (21) des rangées longitudinales (5) de pinces individuelles (20) peuvent être actionnés séparément par le dispositif de commande (24), chacun au moyen d'une ligne de commande (23), et
dans lequel il est prévu, pour une assise de pile, une position de commande dans laquelle au moins une rangée longitudinale extérieure (5) de pinces individuelles (20) est mise à l'arrêt, et il est prévu, pour une assise de pile, une position de commande dans laquelle un plus grand nombre de rangées longitudinales extérieures (5) de pinces individuelles, situées l'une à côté de l'autre est mis à l'arrêt,
caractérisé
en ce que les pinces individuelles (20) agencées en rangées longitudinales (5) sont prévues dans une position pour une assise de pile (9) complète et que, jusqu'à une hauteur d'empilement donnée, on dispose des assises de pile complètes les unes au-dessus des autres,
et en ce qu'à partir de cette hauteur d'empilement donnée, on dispose les unes au-dessus des autres des assises de pile progressivement réduites, grâce au fait que,
la position de commande dans laquelle la rangée longitudinale extérieure (5) est mise à l'arrêt est prévue pour une première assise de pile réduite (13),
la position de commande dans laquelle un plus grand nombre de rangées longitudinales extérieures est mis à l'arrêt est prévue pour une deuxième assise de pile réduite (14),
et il est prévu une position de commande dans laquelle un nombre encore plus grand de rangées longitudinales (5) de pinces individuelles (20) disposées les unes à côté des autres est mis à l'arrêt et à savoir, pour une troisième assise de pile réduite (15).

2. Dispositif selon la revendication 1, caractérisé en ce que, dans les rangées longitudinales (5), un distributeur (21) est associé à chaque pince individuelle (20) et le distributeur (21) de chaque pince individuelle (20) peut être actionné séparément au moyen d'une ligne de commande (23).

3. Dispositif selon la revendication 1 ou 2, dans lequel, pour une première assise de pile, la tête preneuse d'empilement se trouve au-dessus de la plate-forme d'empilement dans une première position de translation tandis que, pour une deuxième assise de pile, disposée à côté, elle se trouve dans une deuxième position de translation, déportée latéralement, caractérisé en ce que les positions de commande des distributeurs (21) dans la première position de translation sont différentes des positions de commande des distributeurs (21) dans la deuxième position de translation, déportée latéralement.

4. Dispositif selon une des revendications précédentes, dans lequel il est prévu une position de translation pour une assise de pile et une position de translation pour une assise de pile suivante, disposée plus haut dans la pile, caractérisé en ce que la deuxième position de translation est déportée latéralement d'un multiple entier de la largeur d'une brique crue par rapport à la première position de translation de la tête preneuse d'empilement (17).
